# EUROPEAN PATENT SPECIFICATION

(11) **EP 0 493 253 B1**
(45) Date of publication and mention of the grant of the patent: **31.01.1996**
(21) Application number: 91403536.5
(22) Date of filing: 24.12.1991
(51) Int. Cl.: H01M 2/10, H01M 2/02

(54) **Socket for batteries**
Steckvorrichtung für Batterien
Socle pour batteries

(30) Priority: 27.12.1990 KR 2120990 U
(43) Date of publication of application: 01.07.1992
(73) Proprietor: LG ELECTRONICS INC., Seoul (KR)
(72) Inventor: Heo, Man Ho, Seo-Ku Daeku (KR)
(74) Representative: Fort, Jacques

(56) References cited:
- EP-A- 0 391 375
- GB-A- 1 396 862
- GB-A- 1 533 516

## Description

The present invention relates to a socket for housing one or more batteries adaptable for use in electric and electronic appliances, more particularly to a socket into which one or more batteries (e.g., dry cells) are inserted to supply power to circuits of the appliance connected thereto.

In general, electric and electronic appliances uses a plurality of dry cells (e.g., 1.5V dry cell) to supply require power to their circuits. Dry cells are typically housed in a socket, electrically connected in series. The socket has typically a fixed (or inflexible) contact on one side to provide contact for the terminal of the dry cell of a one polarity (e.g., positive), and an elastic contact (e.g., a leaf spring, a coll spring or the like) on the opposite side to provide contact for the terminal of the dry cell of the opposite polarity (e.g., negative.)

When more than one dry cells are required, two types of sockets are generally used. The first type is an elongated type (or "long sized") in which a "positive" contact (i.e., corresponds to the positive polarity of the dry cell) is provided on one sidewall of the socket and a "negative" contact (i.e., corresponds to the negative polarity of the dry cell) on the opposite sidewall of the socket. The dry cells are arranged back to back in series in that the positive (polarity) terminal of one dry cell contacts the positive contact of the socket and the negative (polarity) terminal of another dry cell contacts the negative contact of the socket.

The second type is a lateral (or "wide sized") type in which a first plurality of contacts are alternately provided with respect to its corresponding polarity on one sidewall of the socket, and a second plurality of contacts each corresponding to a respective one of the first plurality are provided on the opposite sidewall of the socket. In this type of sockets, the dry cells, when inserted in the socket, are arranged parallel with respect to one another, and one terminal of each dry cell contacts a respective one of the first plurality of contacts and another terminal contacts a respective one of the second plurality of contacts in order that all of the dry cells are electrically connected in series.

Document GB-A-1 533 516 describes a coupling container for inter-changeable electric cells wherein metal blades connect the positive terminal of a cell with the negative terminal of the next cell.

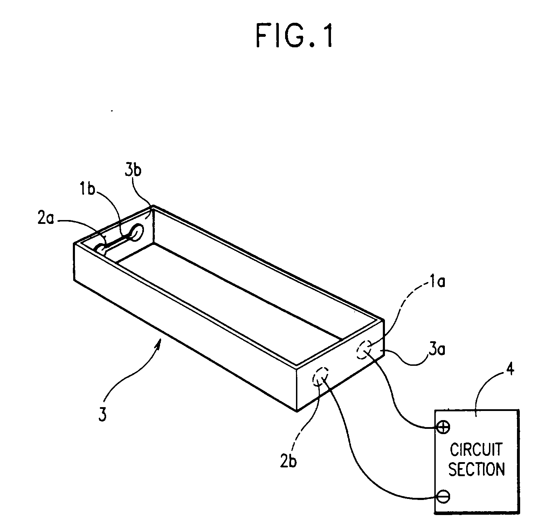

Fig. 1 shows an exemplary lateral type socket adapted to house two dry cells. The socket includes a socket body 3 in which a positive contact 1a and a negative contact 2b are fixed on a sidewall 3a of socket body 3, and a negative contact 1b and a positive contact 2a are fixed on a sidewall 3b of socket body 3 opposite sidewall 3a. Negative and positive contacts 1b and 2a are electrically connected to one another, and positive and negative contacts 1a and 2b are electrically connected to positive "+" and negative "-" terminals, respectively, of circuit section 4 of the appliance.

In this type of socket, when the dry cells are inserted into the socket, the position of each terminal of each dry cell must correspond to a respective contact of the socket in a prearranged fashion. For example, the positive and negative terminals of one of the two dry cells contact positive and negative contacts 1a and 1b, respectively, and the positive and negative terminals of another dry cell contact positive and negative contacts 2a and 2b, respectively, so as to supply power of proper polarities to circuit section 4.

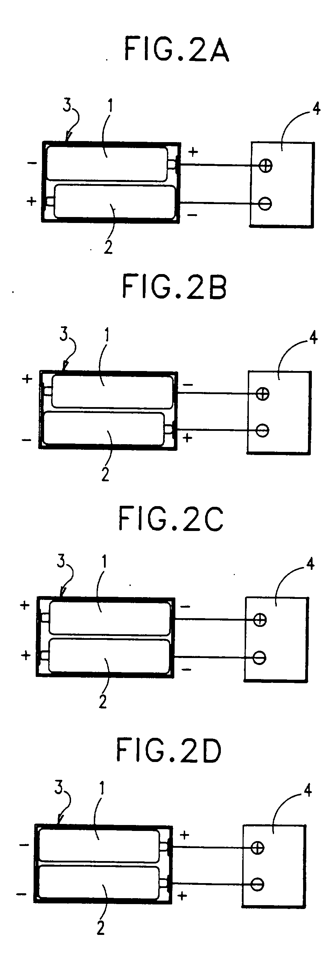

Further, referring to Figs. 2A, 2B, 2C and 2D, dry cells 1 and 2 are placed side by side in socket body 3. Fig. 2A shows a situation where the dry cells are properly placed, and Figs. 2B, 2C and 2D show situations where the dry cells are improperly placed in the socket. Referring to Fig. 2A, the terminal of positive polarity ("positive terminal") of dry cell 1 contacts contact 1a and the positive terminal of dry cell 2 contacts contact 2a of socket body 3. The terminal of negative polarity ("negative terminal") of dry cell 1 contacts negative contact 1b and the negative terminal of dry cell 2 contacts contact 2b of socket body 3. Power of proper polarities from dry cells 1 and 2 is collectively supplied to circuit section 4.

Referring to Fig. 2B, dry cells 1 and 2 are inserted in a reverse order of polarities with respect to the configuration shown in Fig. 2A. In this configuration, power of inverse (i.e., improper) polarities is supplied to circuit section 4, making circuit section 4 inoperative. Similarly, the configuration shown in Figs. 2C and 2D result in supplying power of a common (e.g., positive or negative) polarity (i.e., improper) to circuit section 4.

As stated above, in the conventional socket, to supply power of proper polarities to the circuit, the batteries, typically dry cells, must be placed in the socket in a prearranged fashion. If the user misplaces the dry cells in the socket, it would fail or make the circuit inoperative.

It has been proposed (GB-A-1 396 862) to overcome that problem in a structure only for one battery, by providing the battery with an electrode formed by part of the casing of the battery and another electrode formed by a portion projecting laterally.

The present invention overcomes the problem and disadvantage of the prior art by a socket for a battery or batteries capable of supplying power of proper polarities irrespective of how the batteries are placed in the socket. For that purpose there is provided a socket according to claim 1.

Additional objects and advantages of the invention will be set forth in part in the description which follows, and in part will be obvious from the description, or may be learned by practice of the invention. The objects and advantages of the invention will be realized and attained by means of the elements and combinations particularly pointed out in the appended claims.

The socket may include a plurality of socket members side by side.

The accompanying drawings, which are incorporated in and constitute a part of this specification, illustrate several embodiments of the invention and together with the description, serve to explain the principles of the invention.

In the drawings:

Fig. 1 shows a conventional socket for batteries.

Fig. 2A shows the socket of Fig. 1 having the batteries placed therein in a proper manner.

Figs. 2B, 2C and 2D show the socket of Fig. 1 having the batteries placed in improper manners.

Fig. 3 shows a socket for batteries according to an embodiment of the present invention.

Fig. 4A shows a dimensional relationship between the contacts of the socket of Fig. 3 and the terminals of the battery placed in the socket.

Fig. 4B shows another dimensional relationship between the contacts of the socket of Fig. 3 and the terminal of the battery placed in the socket.

Fig. 4C shows a dimension of the battery adaptable for use in the socket of Fig. 3.

Fig. 5 is an exploded perspective view of the contact of the socket of Fig. 3.

Figs. 6A, 6B, 6C and 6D show the socket of Figure 3 having batteries placed therein in various configurations.

Fig. 7 shows a socket for batteries according to another embodiment of the present invention.

Fig. 8 shows a socket for batteries according to yet another embodiment of the present invention.

### IV. DESCRIPTION OF THE PREFERRED EMBODIMENTS

Reference will now be made in detail to the present preferred embodiments of the invention, examples of which are illustrated in the accompanying drawings. Wherever possible, the same reference numbers will be used throughout the drawings to refer to the same or like parts.

The socket for dry cells of the present invention, as broadly embodied herein, includes a pair of both positive and negative contact members on a common area of an inner sidewall of the socket. Each contact member provides contact for the terminal of a corresponding polarity of the dry cell placed in the socket, independently of the other contact member. For example, one of the pair of contact members provides contact for the positive terminal of the dry cell and another contact member for the negative terminal of the dry cell.

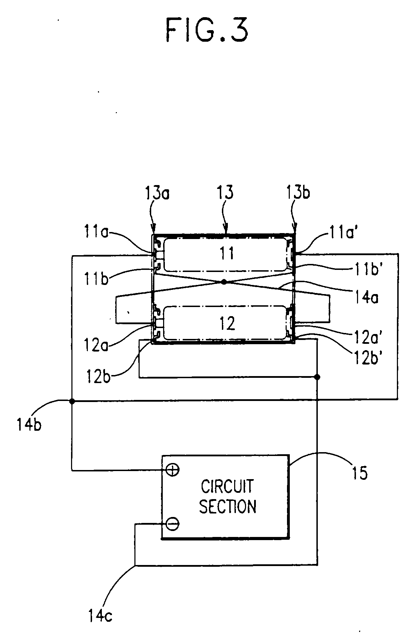

Referring to Fig.3, the socket for batteries according to an embodiment of the present invention includes a pair of positive and negative contacts 11a and 11b which are formed on one common area and another pair of positive and negative contacts 12a and 12b on another common area, of a sidewall 13a of a socket body 13. Likewise, a pair of positive and negative contacts lla' and llb' are provided on one common area and a pair of positive and negative contacts 12a' and 12b' on another common area of a sidewall 13b of the socket body 13.

Contacts 11a and 11b are contactable, independently of one another, by the a respective one of the positive and negative terminals of a dry cell 11. Positive and negative contacts 11a′ and 11b′ are contactable, independently of one another, by a respective one of the positive and negative terminals of dry cell 11. Likewise, positive and negative contacts 12a and 12b are contactable, independently of one another, by a respective one of positive and negative terminals of a dry cell 12. Positive and negative contacts 12a' and 12b' are contactable, independently of one another, a respective one of the positive and negative terminals of dry cell 12.

A conductive member 14a connects negative contacts 11b and 11b' for dry cell 11 to one another and connects negative contacts 11b and 11b' corresponding to dry cell 11 to positive contacts 12a and 12a' corresponding to dry cell 12, respectively. A conductive member 14b jointly connects positive contacts 11a and 11a' to a positive terminal "+" of a circuit section 15. A conductive member 14c jointly connects negative contacts 12b and 12b' to a negative power terminal "-" of circuit section 15.

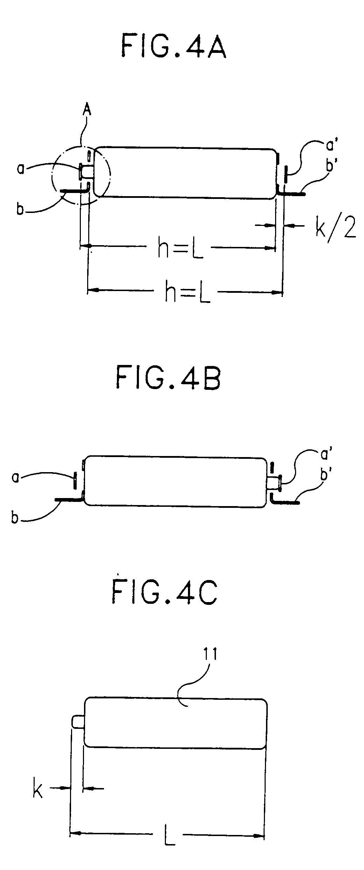

Fig. 4A shows a dimensional relationship between the contacts of the socket of Fig. 3 and the terminals of the battery placed therein in one way and Fig. 4B in another way. Fig. 4C shows a dimensional relation between the length of the terminal and the body of the dry cell adaptable for use in the socket of Fig.3. Referring to Fig. 4A, a pair of positive and negative contacts a and b are fixed on one sidewall of the socket body, and another pair of positive and negative contacts a' and b' are fixed on the opposite sidewall of the socket body.

To secure contact between the battery terminals and the socket contacts, a distance h between positive contact a and negative contact b' is made to be the same as a length L of the body of the dry cell placed therebetween. Further, to secure contact between the positive terminal of the dry cell and a respective positive socket contact, and between the negative terminal of the dry cell and a respective negative socket contact, positive contacts a and a' are spaced from negative contacts b and b', respectively, by a distance K/2, where K (shown in Fig. 4C) is the length of the positive terminal of dry cell 11.

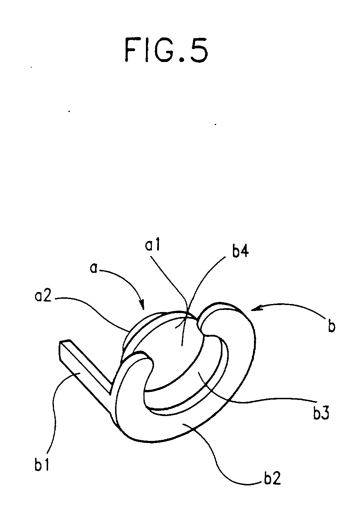

Fig. 5 is an exploded perspective view of portion "A" of Fig. 4, more specifically showing the structure of the positive and negative contacts of the socket viewed from inside of the socket. In this structure, positive contact a includes a disk-shaped contact portion a1 on its front surface facing the positive terminal of the dry cell to be contactable thereby, and a fixing portion a2 on its rear surface opposite the front surface. Fixing portion a2 is securely fixed to a respective sidewall (not shown) of the socket.

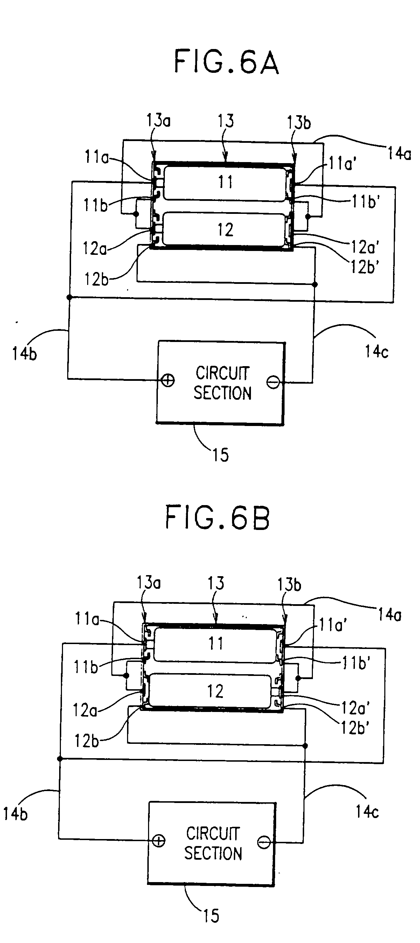

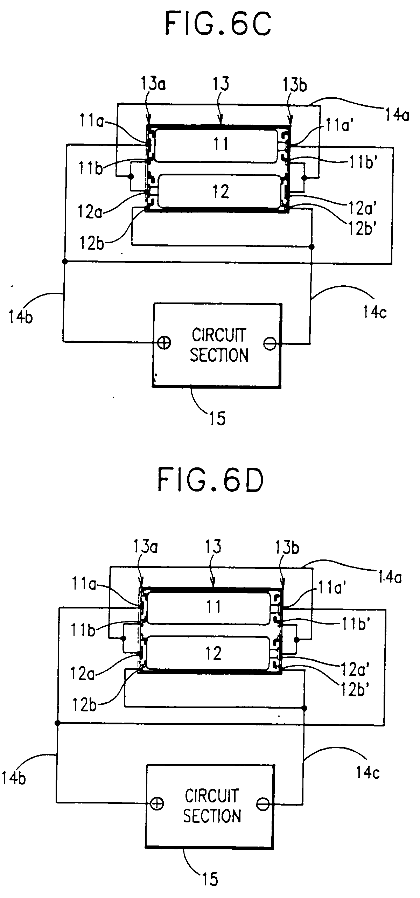

Negative contact b includes a contact portion b2 to be contactable by the negative terminal of the dry cell; a circular guide aperture b3 centrally located in contact portion b2 and having a diameter greater than that of the positive terminal of the dry cell placed in the socket to be contactable by the negative terminal thereof; an opening b4 centrally located in contact portion b2 for guiding the positive terminal of the dry cell through guide aperture b3; and a fixing portion b1 extending from the rear surface of contact portion b2 toward positive contact a and fixed to a respective sidewall (not shown) of the socket. The operation of the above socket is described in reference to Figs. 6A, 6B, 6C and 6D below.

Referring to Fig. 6A, when dry cells 11 and 12 are placed in socket body 13 with their positive terminals facing sidewall 13a and negative terminals facing sidewall 13B, the positive terminals of dry cells 11 and 12 contact positive contacts 11a and 12a, respectively which are fixed to a common area of sidewall 13a of socket body 13. The negative terminals of dry cells 11 and 12 contact negative contacts 11b' and 12b', respectively which are fixed to a common area of sidewall 13b of socket body 13.

Since positive contacts 11a and 12a on sidewall 13a (or 11a' and 12a′ on sidewall 13b) are spaced from negative contacts 11b and 12b on sidewall 13a respectively (or 11b' and 12b' on sidewall 13b, respectively) by K/2, K being the length of the positive terminal of the dry cell (see Fig. 4A), and negative contacts 11b, 11b′, 12b and 12b' are provided with a guide aperture b3 having a diameter greater than that of the positive terminal of the dry cell, the positive terminal of the dry cell placed in the socket can be securely in contact with a corresponding positive contact of socket body 13 such as 11a and 12a through guide aperture b3, while a corresponding negative contact of socket body 13 such as 11b and 12b is separated from the positive terminal of the dry cell. On the other hands, when the dry cell is placed in the socket, the negative terminal of the dry cell is made to contact a corresponding negative contact of socket body 13 such as 11b′ and 12b′ and separated from the positive terminal of the dry cell.

In addition, negative contacts 11b and 11b′ of socket body 13 for dry cell 11 are electrically connected jointly to positive contacts 12a and 12a' for dry cell 12 by a conductive member 14a. The positive terminal of dry cell 11 is electrically connected to positive power terminal "+" of circuit section 15 via positive contact 11a by a conductive member 14b. Negative power terminal (-) of circuit section 15 is connected commonly to negative contacts 12b and 12b′ of socket body 13 by a conductive member 14c.

As a result, a closed loop is formed in which current from the positive terminal of dry cell 12 flows to dry cell 11 via positive contact 12a, conductive member 14a and negative contact 11b′; current from the positive terminal of dry cell 11 flows to positive power terminal "+" of circuit section 15 via conductive member 14b; and current from negative power terminal "-" of circuit section 15 flows to negative contact 12b′ via conductive member 14c so that power of proper polarities is supplied to circuit section 15.

Likewise, referring to Fig. 6D, the positive terminals of dry cells 11 and 12 face sidewall 13b and the negative terminals thereof face sidewall 13a. A closed loop is formed in which the positive terminals of dry cells 11 and 12 contact positive contacts 11a' and 12a', respectively, and the negative terminals of dry cells 11 and 12 contact negative contacts 11b and 12b, respectively, so that current from the positive terminal of first dry cell 11, via positive contact 11a', flows to positive power terminal "+" of circuit section 15 via conductive member 14b. Current from negative power terminal "-" of circuit section 15 flows via conductive member 14c to the negative terminal of dry cell 11 through negative contact 12b, the negative and positive terminals of dry cell 12, positive contact 12a', and negative contact 11b, causing power of proper polarities to be supplied to circuit section 15.

Likewise, referring to Fig. 6B, the positive terminal of dry cell 11 faces sidewall 13a of socket body 13 and the positive terminal of dry cell 12 faces sidewall 13b. A closed loop is provided in which positive contact 11a (which is in contact with the positive terminal of dry cell 11) is connected to positive power terminal "+" of circuit section 15, and negative power terminal "-" of circuit section 15 is connected to positive contact 11a through negative contact 12b (which is in contact with the negative terminal of dry cell 12), the positive terminal of dry cell 12, positive contact 12a′, negative contact 11b', the negative terminal of dry cell 11, and the positive terminal of dry cell 11, causing power of proper polarities to be supplied to circuit section 15.

Likewise, referring to Fig. 6C, the positive terminal of dry cell 11 faces sidewall 13b and that of dry cell 12 faces sidewall 13a. A closed loop is formed in which the positive terminal of dry cell 11 is connected via positive contact 11a′ and conductive member 14b to positive power terminal "+" of circuit section 15, and negative power terminal "-" of circuit section 15 is connected to the negative terminal of dry cell 11 through conductive member 14c, negative contact 12b', positive contact 12a, conductive member 14a and negative contact 11b, causing power of proper polarities to be supplied to circuit section 15.

As set forth above in reference to Figs. 6A through 6D, the positive terminals of the dry cells, when the dry cells are placed in the socket, contact only the corresponding positive contacts of the socket and the negative terminals of the dry cells contact only the corresponding negative contacts of the socket, irrespective of how the terminals of each dry cell are placed in the socket. In other words, negative contacts 11b and 11b' for dry cell 11 are connected jointly to positive contacts 12a and 12a' for dry cell 12 through conductive member 14a in order that dry cells 11 and 12 are electrically connected in series with respect to one another.

Similarly, positive contacts 11a and 11a′ for dry cell 11 are connected jointly to positive power terminal "+" of circuit section 15 through conductive member 14b, and negative contacts 12b and 12b' for dry cell 12 are connected jointly to negative power terminal "-" of circuit section 15. As a result, the socket of the present invention, when the dry cells are placed therein, always supplies power of proper polarities to circuit section 15 irrespective of the position of the terminals of each battery placed in the socket with respect to the positions of the contacts of the socket.

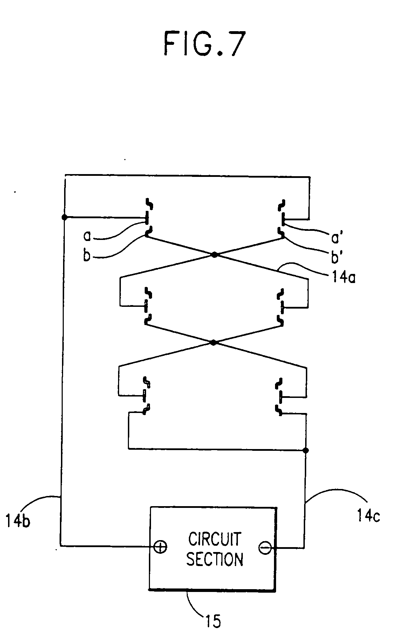

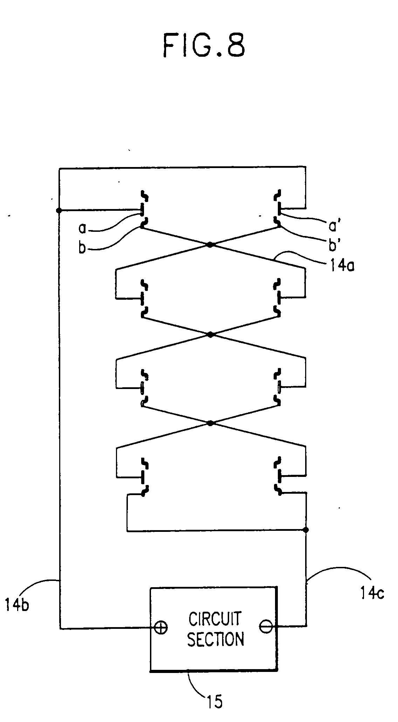

Figs. 7 and 8 show sockets according to further embodiments of the present invention. The socket of Fig. 7 is designed to house three dry cells therein and the socket of Fig. 8 four dry cells therein. The sockets illustrated in Figs. 7 and 8 are designed to supply power of proper polarities from the dry cells placed therein to the circuit connected thereto irrespective of how the terminals of each dry cell in the socket are positioned with respect to the contacts of the socket.

Referring to Fig. 7, contacts a and a′ of a first socket member are connected jointly to positive terminal "+" of circuit section 15 via a conductive member 14b. Negative contacts b and b' of first socket member are connected jointly to positive contacts a and a' of a second socket member, respectively, via a conductive member 14a. Negative contacts b and b' of second socket member are connected to positive contacts a' and a of a third socket member , respectively. Negative contacts b and b' of third socket member, are connected jointly to negative power terminal "+" of circuit section 15 via a conductive member 14c.

Similarly, referring to Fig. 8, negative contacts b and b' of third socket member are connected to positive contacts a' and a of a fourth socket member , respectively. Negative contacts b and b′ of fourth socket member are jointly connected to negative terminal "-" of circuit section 15. As set forth above, a heart of the present invention is that the inventive socket can supply power of proper polarities to circuits connected thereto irrespective of how the terminals of the dry cells inserted in the socket are positioned with respect to the polarity of the contacts of the socket.

Further, the pair of positive and negative contacts of the inventive socket are fixed to a common area of the sidewall of the socket, and each contact provides contact only for the terminal of a corresponding polarity of the dry cell placed in the socket. With these inventive sockets, the user of the appliance need no concern about misplacing the dry cells in the socket, because irrespective of how be places the dry cells in the socket, power of proper polarities is always supplied to circuits connected thereto.

Other embodiments of the invention will be apparent to the skilled in the art from consideration of the specification and practice of the invention disclosed herein. For example, sockets for dry cells were described in the specification for exemplary purpose. The inventive sockets are not limited to dry cells, but can be adapted for other types of batteries. Further, these types of sockets can be conveniently used to charge rechargeable batteries.

## Claims

1. A socket for housing at least one battery having a positive terminal at one end and a negative terminal of different shape at the other end, said socket being connectable to supply power to a circuit, comprising:
a socket body (13) having mutually opposed first and second sidewalls (13a,13b) and
for the or each battery, a first pair of positive and negative contacts provided on one common area of the first sidewall and a second pair of positive and negative contacts provided on another common area of the second sidewall,
wherein said positive contacts (11a, 11a'; l2a,12a') each includes a disk-shaped contact portion (a1) for contact with a positive terminal of the battery and a fixing portion (a2) on its rear surface opposite the front surface, and
wherein said negative contacts (11b,11b'; 12b,12b') each includes a contact portion (b2) formed with a central circular aperture (b3) having a diameter greater than that of the positive terminal of the battery, and a fixing portion (b1) extending from the rear surface of the contact portion (b2) toward the respective common area, and conductive members (14b,14c) for connection of the negative and positive contacts to a circuit section (15).

2. A socket according to claim 1 for housing a plurality of Said batteries in series connection, wherein said conductive members comprise:
first conductive members (14b) for connecting the positive contacts (11a,11a') cooperating with a first of said batteries together and with a positive terminal of the circuit section (15)
a conductive member (14c) for connecting the negative contacts (12b,12b') associated with another of said batteries (12) together and with a negative terminal of the circuit section, and
conductive members each connecting the positive contacts at a battery connection with the negative contacts at another battery connection, for generating a series arrangement whatever the placement of the batteries in the socket.

3. A socket according to claim 1 or 2, wherein the positive and negative contacts are sized to receive a battery consisting of a dry cell.

4. A socket according to any preceding claim, wherein the central circular aperture (b3) of each said negative contact is provided with an opening (b4) for passage of a respective positive terminal.

## Patentansprüche

1. Fassung zur Aufnahme wenigstens einer Batterie mit einem positiven Anschluß an einem Ende und einem negativen Anschluß anderer Form am anderen Ende, wobei die Fassung zur Stromversorgung an eine Schaltung anschließbar ist und aufweist:
einen Fassungskörper (13) mit einer ersten und einer zweiten Seitenwand (13a, 13b), die einander gegenüberliegen und
für die oder jede Batterie ein erstes Paar aus einem positiven und einem negativen Kontakt, das an einer ersten gemeinsamen Fläche der ersten Seitenwand vorgesehen ist, und ein zweites Paar aus einem positiven und einem negativen Kontakt, das an einer weiteren gemeinsamen Fläche der zweiten Seitenwand vorgesehen ist,
wobei die positiven Kontakte (11a, 11a'; 12a, 12a') jeweils einen scheibenförmigen Kontaktteil (a1) zur Kontaktierung eines positiven Anschlusses der Batterie und einen Befestigungsteil (a2) an ihrer ihrer Vorderseite abgekehrten Rückseite aufweisen und
die negativen Kontakte (11b, 11b'; 12b, 12b') jeweils einen Kontaktteil (b2), der mit einer mittleren kreisförmigen Öffnung (b3) versehen ist, die einen größeren Durchmesser als der positive Anschluß der Batterie hat, und einen Befestigungsteil (bl), der sich von der Rückseite des Kontaktteils (b2) zur jeweiligen gemeinsamen Fläche erstreckt, und leitende Elemente (14b, 14c) zum Verbinden der negativen und positiven Kontakte mit einem Schaltungsabschnitt (15) aufweisen.

2. Fassung nach Anspruch 1 zur Aufnahme mehrerer Batterien in Reihenschaltung, wobei die leitenden Elemente aufweisen:
erste leitende Elemente (14b), um die positiven Kontakte (11a, 11a'), die mit einer ersten der Batterien zusammenwirken, miteinander und mit einem positiven Anschluß des Schaltungsabschnitts (15) zu verbinden,
ein leitendes Element (14c), um die zusammengehörigen negativen Kontakte (12b, 12b') einer anderen der Batterien (12) miteinander und mit einem negativen Anschluß des Schaltungsabschnitts zu verbinden, und
leitende Elemente, die jeweils die positiven Kontakte an einer Batterieverbindung mit den negativen Kontakten an einer anderen Batterieverbindung verbinden, um eine Reihenschaltung der Batterien, unabhängig von ihrer Lage in der Fassung, zu bilden.

3. Fassung nach Anspruch 1 oder 2, bei der die positiven und negativen Kontakte zur Aufnahme einer aus einer Trockenzelle bestehenden Batterie bemessen sind.

4. Fassung nach einem der vorstehenden Ansprüche, bei der die mittlere kreisförmige Öffnung (b3) jedes der erwähnten negativen Kontakte mit einer Öffnung (b4) für den Durchgang jeweils eines positiven Anschlusses versehen ist.

## Revendications

1. Un réceptacle pour loger au moins une source de tension continue ayant une borne positive à une extrémité et une borne négative de forme différente à l'autre extrémité, ce réceptacle pouvant être connecté de façon à fournir de l'énergie à un circuit, comprenant :
un corps de réceptacle (13) ayant des première et seconde parois latérales mutuellement opposées (13a, 13b), et
pour la source de tension continue, ou chacune d'elles, une première paire de contacts positif et négatif placés sur une zone commune de la première paroi latérale, et une seconde paire de contacts positif et négatif placés sur une autre zone commune de la seconde paroi latérale,
dans lequel chacun des contacts positifs (11a, 11a' ; 12a, 12a') comprend une partie de contact en forme de disque (a1) pour établir un contact avec une borne positive de la source de tension continue, et une partie de fixation (a2) sur sa surface arrière opposée à la surface avant, et
dans lequel chacun des contacts négatifs (11b, 11b' ; 12b, 12b') comprend une partie de contact (b2) dans laquelle est formée une ouverture circulaire centrale (b3) ayant un diamètre supérieur à celui de la borne positive de la source de tension continue, et une partie de fixation (b1) qui s'étend à partir de la surface arrière de la partie de contact (b2), vers la zone commune respective, et des éléments conducteurs (14b, 14c) pour la connexion des contacts négatifs et positifs à une partie de circuit (15).

2. Un réceptacle selon la revendication 1, pour loger un ensemble des sources de tension continue connectées en série, dans lequel les éléments conducteurs comprennent :
des premiers éléments conducteurs (14b) pour connecter ensemble et à une borne positive de la partie de circuit (15), les contacts positifs (11a, 11a') qui coopèrent avec une première des sources de tension continue,
un élément conducteur (14c) pour connecter ensemble et avec une borne négative de la partie de circuit, les contacts négatifs (12b, 12b') qui sont associé à une autre des sources de tension continue (12), et
des éléments conducteurs connectant chacun les contacts positifs à une connexion de source de tension continue aux contacts négatifs à une autre connexion de source de tension continue, pour former une configuration série, quel que soit le placement des sources de tension continue dans le réceptacle.

3. Un réceptacle selon la revendication 1 ou 2, dans lequel les contacts positifs et négatifs sont dimensionnés pour recevoir une source de tension continue consistant en une pile sèche.

4. Un réceptacle selon l'une quelconque des revendications précédentes, dans lequel l'ouverture circulaire centrale (b3) de chaque contact négatif est munie d'un trou (b4) pour le passage d'une borne positive respective.
